# EUROPÄISCHE PATENTSCHRIFT

(11) **EP 0 832 831 B1**
(45) Veröffentlichungstag und Bekanntmachung des Hinweises auf die Patenterteilung: **30.10.2002**
(21) Anmeldenummer: 97115858.9
(22) Anmeldetag: 12.09.1997
(51) Int. Cl.: B65G 67/60

(54) **Vorrichtung zum kontinuierlichen Be- und Entladen, insbesondere von Schiffen, mit Stückgut**
Device for continuously loading and unloading articles,in particular for ships
Dispositif pour le chargement en continu des articles, notamment des bateaux

(30) Priorität: 26.09.1996 DE 19639535
(43) Veröffentlichungstag der Anmeldung: 01.04.1998
(73) Patentinhaber: ThyssenKrupp Fördertechnik GmbH, 45143 Essen (DE)
(72) Erfinder: Steckel, Horst, 66386 St. Ingbert (DE); Arend, Jürgen, 66123 Saarbrücken (DE)
(74) Vertreter: John, Ernst, Dipl.-Ing.

(56) Entgegenhaltungen:
- DE-A- 1 914 706
- DE-A- 4 111 740
- DE-C- 2 622 399
- DE-C- 4 243 013
- DE-U- 8 424 011

## Beschreibung

Die Erfindung betrifft eine Vorrichtung zum kontinuierlichen Be- und Entladen, insbesondere von Schiffen, mit Stückgut, wie Säcke, Kartons u. dgl., mit einem Senkrechtförderer, der mittels eines mit einem Drehteil versehenen Portals parallel zu dem Schiff verfahrbar ist, wobei der Senkrechtförderer an einem auf dem Drehteil des Portals angeordneten, mit einem Auslegerband versehen ein heb-, senk- und schwenkbaren Ausleger angebracht ist und an senkrecht geführten Tragelementen, beispielsweise Tragketten, befestigte Plattformen für die Aufnahme des Stückgutes aufweist, und wobei der Senkrechtförderer über eine Halterung mittels einer Parallelführung an dem Ausleger befestigt ist.

Bei bekannten Vorrichtungen zum kontinuierlichen Be- und Entladen, insbesondere von Schiffen, mit Stückgut ist der Senkrechtförderer im allgemeinen als Wendelförderer ausgebildet (EP 0 420 283 A1). Derartige Vorrichtungen erfordern einen sehr hohen konstruktiven Aufwand. Ein weiterer Nachteil besteht darin, daß die Transportfläche des Förderers wegen ihrer wendelförmigen Ausbildung verhältnismäßig viele Einheiten des zu fördernden Stückgutes aufnimmt, so daß die Vorrichtung entsprechend stabil ausgebildet sein muß.

Bei einer bekannten Vorrichtung weist der Senkrechtförderer anstelle eines Wendelförderers ein Gurtförderband sowie ein diesem zugeordnetes Klemmband oder Transportketten auf (DE 26 22 399 C3). Damit der Senkrechtförderer bei jeder Schwenkstellung des Auslegerarmes eine lotrechte Stellung einnimmt, ist eine Parallelführung vorgesehen. Bei dieser Vorrichtung ist der Senkrechtförderer sehr kompliziert aufgebaut, so daß die Vorrichtung insgesamt sehr aufwendig und störungsanfällig ist.

Ferner ist eine Vorrichtung der eingangs genannten Art bekannt, bei der der Senkrechtförderer ebenfalls nicht als Wendelförderer ausgebildet ist, Sondern an senkrecht geführten Tragelementen befestigte Plattformen für die Aufnahme des Stückgutes aufweist (EP 0 382 707 A1). In diesem Falle weist die Vorrichtung im oberen Bereich des Senkrechtförderers eine sehr große und somit sehr teure Kugeldrehverbindung mit zugehörigem Antrieb auf. Ferner ist die Vorrichtung mit zwei großen Kreisförderern mit je einem eigenen Antrieb versehen. Bei dieser Vorrichtung sind sehr große Massen an der Spitze des Auslegers befestigt, so daß der Ausleger eine entsprechend aufwendige und daher teure Konstruktion erfordert. Diese bekannte Vorrichtung weist zwar auch bereits ein Teleskopband auf, das aber starr mit dem Senkrechtförderer verbunden ist und daher nur gemeinsam mit diesen geschwenkt werden kann. Durch diese Anordnung ist aber der Schwenkbereich des Teleskopbandes spürbar begrenzt.

Der Erfindung liegt die Aufgabe zugrunde, eine Vorrichtung zu schaffen, die wesentlich einfacher aufgebaut ist und kostengünstiger hergestellt werden kann als die bekannten Vorrichtungen für das Be- und Entladen von Stückgut.

Die Lösung der gestellten Aufgabe besteht bei einer Vorrichtung der eingangs genannten Art, d.h. bei einer vorrichtung gemäß Oberbegriff des Anspruchs 1, darin,
- daß die Zuführung des Stückgutes zu dem Senkrechtförderer durch ein Teleskopband erfolgt, das - mittels eines Drehantriebs um eine vertikale Achse schwenkbar - an dem Senkrechtförderer angelenkt ist,
- und daß zwischen dem Teleskopband und dem Senkrechtförderer eine Übergabezunge, ein Zuführband und ein Eintaktband vorgehen sind.

Da infolge der erfindungsgemäßen Ausgestaltung sowohl der Senkrechtförderer gegenüber dem Ausleger als auch das Teleskopband gegenüber dem Senkrechtförderer eine Schwenkbewegung von jeweils ± 90° ausführen und somit das Telekopband um ± 180° zum Ausleger geschwenkt werden kann, erreicht das Teleskopband jede Stelle des Schiffsraumes, wobei auch in kleine bzw. enge Schiffsluken eingefahren werden kann. Dadurch ist die sonst erforderliche Plattform mit Kugeldrehverbindung entbehrlicht. Die erfindungsgemäße Vorrichtung kann somit verhältnismäßig leicht ausgebildet werden.

Durch die Art der Befestigung des Senkrechtförderers an dem Ausleger der Vorrichtung ist gewährleistet, daß der Senkrechtförderer stets genau senkrecht steht.

Durch die Verwendung eines Senkrechtförderers mit senkrecht geführten Tragelementen und daran befestigten Plattformen anstelle eines herkömmlichen Wendelförderers in Verbindung mit einer vorgenannten erfindungsgemäßen Ausgestaltung der Vorrichtung ergeben sich erhebliche weitere Vorteile. Weil die Anzahl der auf den Plattformen befindlichen Einheiten des Stückgutes wesentlich geringer ist als bei einem herkömmlichen Wendelförderer, ist auch die Belastung des erfindungsgemäßen Senkrechtförderers wesentlich geringer als die Belastung eines Wendelförderers, und weil die Breite des erfindungsgemäßen Senkrechtförderers nur etwa halb so groß ist wie der Außendurchmesser eines Wendelförderers, und somit eine wesentlich kleinere Windfläche bietet, ergibt sich für die erfindungsgemäße Vorrichtung eine äußerst leichte Bauweise, die auch eine erhebliche Kostenreduzierung zur Folge hat.

In Ausgestaltung der Erfindung erfolgt die Übergabe des Stückgutes von dem Senkrechtförderer auf das Auslegerband über ein Eintaktband, eine Übergabezunge und ein Zuführband.

Üblicherweise erfolgt die Förderung von Stückgut über Kaibrücken. Um aber auch Stückgut von einem auf dem Boden des Kais befindlichen Kaiband zu- bzw. abzuführen, ist die erfindungsgemäße Vorrichtung anstelle des sonst üblichen Schrägförderers mit einem weiteren Senkrechtförderer versehen, der sich neben einem auf dem Kai angeordneten Kaiband befindet und dem das Stückgut in seinem unterem Bereich von dem Kaiband zugeführt wird und der das Stückgut in seinem oberen Bereich auf den Auslegerband übergibt, wobei für die Übergabe des Stückgutes von dem weiteren Senkrechtförderer auf das Auslegerband ein Eintaktband, eine Übergabezunge und ein Zuführband vorgesehen sind.

Die Übergabe des Stückgutes von dem Kaiband auf den weiteren Senkrechtförderer kann ebenfalls über ein Eintaktband, eine Übergabezunge und ein Zuführband erfolgen.

Nach einem weiteren Merkmal der Erfindung sind die Übergabezunge und das Zuführband um eine Achse schwenkbar angeordnet. Dadurch kann die Vorrichtung in einfachster Weise - durch Schwenken der genannten Elemente um die Achse um 180° in die jeweilige Förderrichtung - vom Beladevorgang auf den Entladevorgang umgestellt werden und umgekehrt.

Durch die erfindungsgemäße Vorrichtung werden das Be- und das Entladen von Schiffen wesentlich vereinfacht, und zwar unabhängig von Schiffstypen und Wasserstandsunterschieden. Durch entsprechende Anpassung der erfindungsgemäßen Vorrichtung ist auch das Be- und Entladen von Güterzügen, LKW o. dgl. möglich.

Die Erfindung ist anhand der Zeichnung, in der ein Ausführungsbeispiele der erfindungsgemäßen Vorrichtung schematisch dargestellt ist, näher erläutert. Es zeigen:
- Fig. 1: eine Vorrichtung in Seitenansicht, wobei mehrere Stellungen des Auslegers und des Senkrechtförderers der Vorrichtung angedeutet sind;
- Fig. 2: den Senkrechtförderer der in Fig. 1 dargestellten Vorrichtung mit seinen Anschlußstellen zum Ausleger der Vorrichtung und mit einem Teleskopband für die Zuführung des Stückgutes, in größerem Maßstab;
- Fig. 3: eine Einzelheit der in Fig. 1 dargestellten Vorrichtung, in erheblich größerem Maßstab,
- Fig. 4: die in Fig. 3 dargestellte Einzelheit, wobei deren Elemente in einer anderen Stellung dargestellt sind.

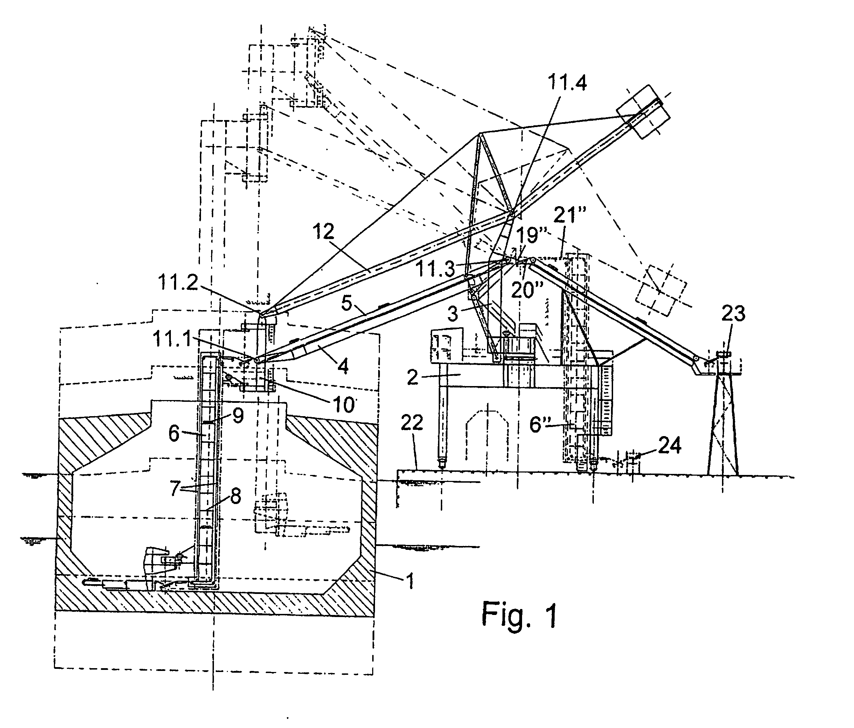

In Fig. 1 ist die erfindungsgemäße Vorrichtung während der Entladung eines Schiffes 1 dargestellt. Die Vorrichtung besteht im wesentlichen aus einem parallel zu dem Schiff 1 verfahrbaren Portal 2 mit einem Drehteil 3 und einem darauf angeordneten heb-, senk- und drehbaren Ausleger 4 mit einem Auslegerband 5. An der Spitze des Auslegers 4 ist ein Senkrechtförderer 6 angebracht.

Der Senkrechtförderer 6, der senkrecht geführte Tragelemente 7 aufweist, an denen in bestimmgen Abständen Plattformen 8 für die Aufnahme des Stückgutes 9 befestigt sind, ist über eine Halterung 10 an dem Ausleger 4 befestigt. Die Halterung 10 weist zwei Drehpunkte 11.1 und 11.2 auf. Mit einem Drehpunkt 11.1 ist die Halterung 10 an dem Ausleger 4 und mit dem anderen Drehpunkt 11.2 an einem Parallellenker 12 befestigt. Die beiden Drehpunkte 11.1 und 11.2 bilden zwei Ecken eines Parallelogramms, dessen beide anderen Ecken zwei weitere Drehpunkte 11.3 und 11.4 bilden, die eine Verbindung des Auslegers 4 und des Parallellenkers 12 mit dem Drehteil 3 des Portals 2 darstellen. Der die Verbindung des Auslegers 4 mit dem Drehteil 3 des Portals 2 bildende Drehpunkt 11.3 bildet gleichzeitig die Hub- und Senkachse des Auslegers 4.

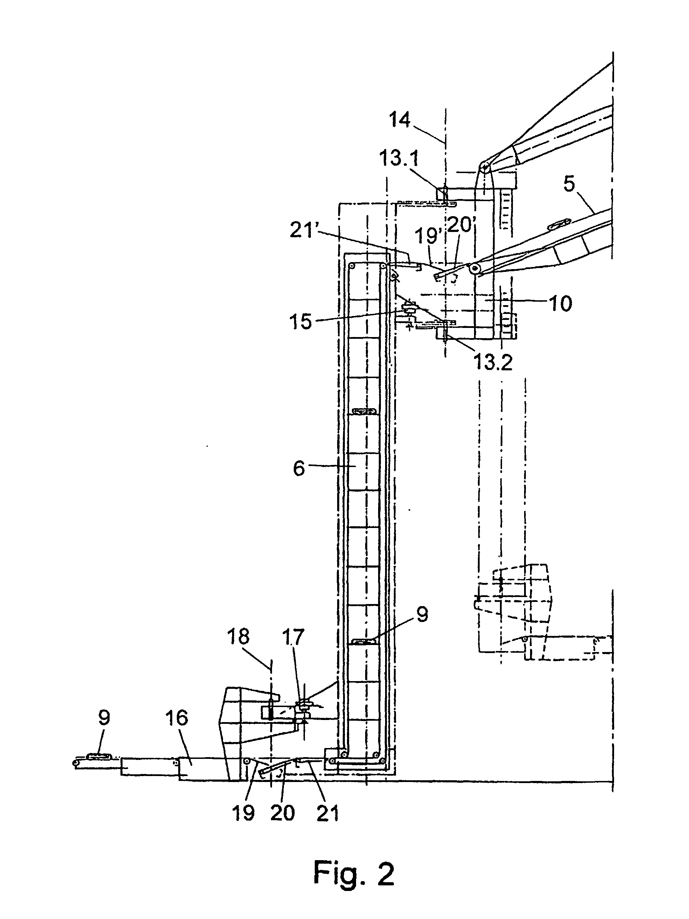

Für die Verbindung des Senkrechtförderers 6 mit der Halterung 10 dienen - wie Fig. 2 zeigt - zwei übereinander angeordnete Drehlager 13.1 und 13.2, deren Achsen die Schwenkachse 14 des Senkrechtförderers 6 bildet. Für das Schwenken des Senkrechtförderer 6 um die Schwenkachse 14 ist ein Drehantrieb 15 vorgesehen.

Wie aus Fig. 2 zu ersehen ist, erfolgt die Zuführung des Stückgutes 9 zu dem Senkrechtförderer 6 durch ein Teleskopband 16. Das Auflegen des Stückgutes 9 auf das Teleskopband 16 bzw. das Abnehmen erfolgt von Hand, wobei auch eine unregelmäßige Beschickung vorkommen kann. Das Teleskopband 16 ist an dem Senkrechtförderer 6 angelenkt und mittels eines Drehantriebs 17 um eine Achse 18 schwenkbar. Zwischen dem Teleskopband 16 und dem Senkrechtförderer 6 sind eine Übergabezunge 19, ein Zuführband 20 und ein Eintaktband 21 vorgesehen. Das Eintaktband 21 ist ein kurzes Förderband, das nur eine Einheit des zu fördernden Stückgutes aufnehmen kann.

Wie ebenfalls aus Fig. 2 zu ersehen ist, erfolgt die Übergabe des Stückgutes 9 von dem Senkrechtförderer 6 auf das Auslegerband 5 über ein weiteres Eintaktband 21', eine weitere Übergabezunge 19' und ein weiteres Zuführband 20'.

Um alternativ zu der üblichen Förderung von Stückgut über eine auf dem Kai 22 (Fig. 1) befindlichen Kaibrücke 23, auch Stückgut von einem auf dem Boden des Kais 22 befindlichen Kaiband 24 zu- bzw. abzuführen ist neben dem Kaiband 24 ein weiterer Senkrechtförderer 6'' vorgesehen. In seinem unteren Bereich steht der Senkrechtförderer 6'' mit dem Kaiband 24 und in seinem oberen Bereich mit dem Auslegerband 5 in Verbindung. Die Verbindung des Senkrechtförderers 6'' mit dem Auslegerband 5 ist durch ein Eintaktband 21'', eine Übergabezunge 19'' und ein Zuführband 20'' gebildet.

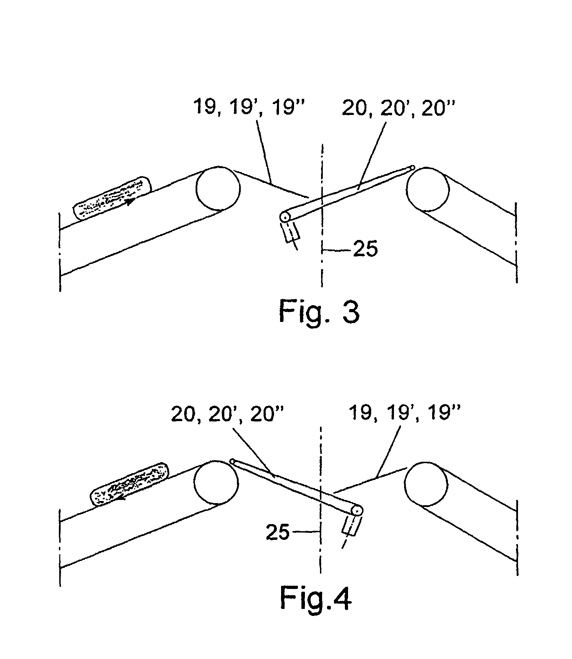

Die Fig. 3 und 4 zeigen, das die Übergabezunge 19, 19', 19'' und das Zuführband 20, 20', 20'' um eine Achse 25 schwenkbar angeordnet sind. Hierbei sind die beiden vorgenannten Elemente in Fig. 3 während des Entladens und in Fig. 4 während des Beladens dargestellt.

## Patentansprüche

1. Vorrichtung zum kontinuierlichen Be- und Entladen, insbesondere von Schiffen (1), mit Stückgut (9), wie Säcke, Kartons u. dgl., mit einem Senkrechtförderer (6), der mittels eines mit einem Drehteil (3) versehenen Portals (2) parallel zu dem Schiff (1) verfahrbar ist, wobei der Senkrechtförderer (6) an einem auf dem Drehteil (3) des Portals (2) angeordneten, mit einem Auslegerband (5) versehenen heb-, senk- und um eine vertikale Achse (14) schwenkbaren Ausleger (4) angebracht ist und an senkrecht geführten Tragelementen (7), beispielsweise Tragketten, befestigte Plattformen (8) für die Aufnahme des Stückgutes (9) aufweist, und wobei der Senkrechtförderer (6) über eine Halterung (10) mittels einer Parallelführung (3, 4, 10, 12) an dem Ausleger (4) befestigt ist,
**dadurch gekennzeichnet,**
1.1 daß die Zuführung des Stückgutes (9) zu dem Senkrechtförderer (6) durch ein Teleskopband (16) erfolgt, das - mittels eines Drehantriebs (17) um eine vertikale Achse (18) schwenkbar - an dem Senkrechtförderer (6) angelenkt ist,
1.2 und daß zwischen dem Teleskopband (16) und dem Senkrechtförderer (6) eine Übergabezunge (19), ein Zuführband (20) und ein Eintaktband (21) vorgesehen sind.

2. Vorrichtung nach Anspruch 1, **dadurch gekennzeichnet, daß** die Übergabe des Stückgutes (9) von dem Senkrechtförderer (6) auf das Auslegerband (5) über ein Eintaktband (21'), eine Übergabezunge (19') und ein Zuführband (20') erfolgt.

3. Vorrichtung nach Anspruch 1 oder 2, **dadurch gekennzeichnet, daß** sie mit einem weiteren Senkrechtförderer (6") versehen ist, der sich neben einem auf dem Kai (22) angeordneten Kaiband (24) befindet und dem das Stückgut (9) in seinem unteren Bereich von dem Kaiband (24) zugeführt wird und der das Stückgut (9) in seinem oberen Bereich auf das Auslegerband (5) übergibt, wobei für die Übergabe des Stückgutes (9) von dem weiteren Senkrechtförderer (6") auf das Auslegerband (5) ein Eintaktband (21"), eine Übergabezunge (19") und ein Zuführband (20") vorgesehen sind.

4. Vorrichtung nach Anspruch 2 oder 3, **dadurch gekennzeichnet, daß** die Übergabezunge (19, 19', 19") und das Zuführband (20, 20', 20") um eine Achse (25) schwenkbar angeordnet sind.

## Claims

1. Device for the continuous loading and unloading of unit load (9) such as sacks, cartons and the like, in particular for ships (1), having a vertical conveyor (6), which may be moved parallel to the ship (1) by means of a gantry (2) provided with a rotary section (3), said vertical conveyor (6) being attached to a boom (4), which is disposed on the rotary section (3) of the gantry (2), is provided with a boom belt (5) and may be raised, lowered and swivelled around a vertical axis (14), and said vertical conveyor having platforms (8) for receiving the unit load (9) which are secured to vertically guided supporting elements (7), e.g. support chains, and said vertical conveyor (6) being secured to the boom (4) by means of a parallel guide means (3, 4, 10, 12) via a mounting (10), **characterised in that**
1.1 the delivery of the unit load (9) to the vertical conveyor (6) is achieved by a telescopic belt (16), which - being capable of swivelling around a vertical axis (18) by means of a rotary drive (17) - is articulated to the vertical conveyor (6),
1.2 and that a transfer finger (19), a feed belt (20) and a single-cycle belt (21) are provided between the telescopic belt (16) and the vertical conveyor (6).

2. Device according to Claim 1, **characterised in that** the transfer of the unit load (9) from the vertical conveyor (6) onto the boom belt (5) is conducted via a single-cycle belt (21'), a transfer finger (19') and a feed belt (20').

3. Device according to Claim 1 or 2, **characterised in that** it is provided with a further vertical conveyor (6"), which is located next to a wharf belt (24) disposed on the wharf (22) and to which the unit load (9) is delivered in its lower region by the wharf belt (24) and which transfers the unit load (9) in its upper region onto the boom belt (5), wherein a single-cycle belt (21"), a transfer finger (19") and a feed belt (20") are provided for the transfer of the unit load (9) from the further vertical conveyor (6") onto the boom belt (5).

4. Device according to Claim 2 or 3, **characterised in that** the transfer finger (19, 19', 19") and the feed belt (20, 20', 20") are arranged to be able to swivel around an axis (25).

## Revendications

1. Dispositif de chargement et de déchargement en continu de colis, tels que sacs, cartons et similaires, en particulier de navires, avec un élévateur (6), qui peut se déplacer parallèlement au navire (1) au moyen d'un portique (2) muni d'une partie rotative (3), l'élévateur (6) étant disposé à une flèche (4) pouvant être levée, abaissée et pivotée autour d'un axe vertical (14), située sur la partie rotative (3) du portique (2) et munie d'un transporteur de flèche (5), et présentant des plates-formes (8) fixées à des éléments porteurs (7) guidés verticalement, des chaînes porteuses par exemple, et destinées à recevoir les colis (9), et l'élévateur (6) étant fixé à la flèche (4) par l'intermédiaire d'un support (10) au moyen d'un guidage parallèle (3, 4, 10, 12), **caractérisé en ce que**
1.1 l'amenée des colis (9) à l'élévateur (6) est effectué par un transporteur à bande télescopique (16) qui est articulé à l'élévateur (6) de manière à pouvoir pivoter autour d'un axe vertical (18) au moyen d'un entraînement de rotation (17)
1.2 et **en ce qu'**il est prévu, entre le transporteur à bande télescopique (16) et l'élévateur (6), une langue de transfert (19), une bande d'amenée (20) et une bande à une cadence (21).

2. Dispositif selon la revendication 1, **caractérisé en ce que** le transfert des colis (9) de l'élévateur (6) au transporteur de flèche (5) est effectué par l'intermédiaire d'une bande à une cadence (21'), d'une langue de transfert (19') et d'une bande d'amenée (20').

3. Dispositif selon la revendication 1 ou 2, **caractérisé en ce qu'**il est équipé d'un autre élévateur (6'') qui se trouve à côté d'un transporteur à bande de quai (24) disposé sur le quai (22) et auquel les colis (9) sont amenés à sa partie inférieure à partir du transporteur à bande de quai (24) et qui transfère les colis (9) au transporteur de flèche (5) à sa partie supérieure, une bande à une cadence (21''), une langue de transfert (19'') et une bande d'amenée (20") étant prévues pour le transfert des colis (9) de l'autre élévateur (6'') au transporteur de flèche (5).

4. Dispositif selon la revendication 2 ou 3, **caractérisé en ce que** la langue de transfert (19, 19', 19'') et la bande d'amenée (20, 20', 20'') sont disposées de manière à pouvoir pivoter autour d'un axe (25).
